# DEMANDE DE BREVET EUROPEEN

(11) **EP 4 840 726 A1**
(43) Date de publication de la demande: **18.11.2026**
(21) Numéro de dépôt: 26170248.4
(22) Date de dépôt: 01.04.2026
(51) Int. Cl.: B62D 25/04, B62D 21/15

(54) **DISPOSITIF ABSORBEUR POUR CHOC ARRIÈRE, CAISSE DE VÉHICULE ET VÉHICULE ÉQUIPÉS D'UN TEL DISPOSITIF ABSORBEUR**

(30) Priorité: 12.05.2025 FR 2504976
(71) Demandeur: Stellantis Auto SAS, 78300 Poissy (FR)
(72) Inventeur: BENANE, SAID, 94240 L HAY LES ROSES (FR)
(74) Mandataire: BCIP

(57) **Abrégé**

L'invention concerne un dispositif (1) absorbeur pour une caisse (2) de véhicule automobile, le dispositif (1) présentant au moins une première patte d'appui (4) chacune faisant saillie d'un corps (5) du dispositif (1) et conçue pour venir en appui d'un pied arrière (6) de la caisse (2), le dispositif (1) présentant au moins une deuxième patte d'appui (7) chacune faisant saillie du corps (5) et conçue pour venir en appui d'un passage de roue (8) de la caisse (2), le dispositif (1) présentant au moins une troisième patte d'appui (10) chacune faisant saillie du corps (5) et conçue pour venir en appui de la caisse (2), le corps (5) étant conçu pour transmettre, de chaque première patte d'appui (4) vers chaque deuxième patte d'appui (7), au moins une partie des efforts générés lors d'un choc arrière sur le pied arrière (6), chaque troisième patte d'appui (10) étant conformée pour limiter la rotation du corps (5) durant la transmission de l'énergie du choc arrière.

## Description

Le domaine technique concerne les dispositifs absorbeur pour renforcer une caisse en cas de choc arrière, les caisses de véhicule présentant au moins un tel dispositif absorbeur et les véhicules automobiles présentant une telle caisse.

Le domaine de la sécurité routière constitue une priorité majeure pour les constructeurs d'automobiles, en particulier face aux évolutions rapides vers les véhicules à motorisation électrique. Dans ce contexte, les constructeurs d'automobiles doivent en effet relever des défis techniques complexes pour assurer non seulement la sécurité des passagers mais aussi l'intégrité des composants critiques tels que la batterie, particulièrement vulnérable lors d'un choc.

En effet, le développement d'un nouveau véhicule nécessite une prise en compte rigoureuse des préoccupations liées à la sécurité et des réglementations toujours plus contraignantes. Les véhicules doivent répondre à des critères stricts définis par des tests normalisés simulant divers scénarios de collisions. Ces procédures imposent des exigences croissantes en termes de résistance aux chocs, ce qui pousse les constructeurs à déployer constamment de nouvelles innovations afin de garantir la conformité et la sécurité.

Dans le cas particulier des véhicules électriques, la batterie constitue un élément central dont la protection revêt une importance cruciale, puisqu'une déformation excessive du châssis lors d'un choc, notamment un choc arrière peut engendrer des risques significatifs tels que l'incendie ou l'explosion de la batterie, compromettant gravement la sécurité des occupants et celle des équipes d'intervention post-accident. Par ailleurs, l'optimisation de l'autonomie d'un véhicule automobile requiert un allégement de la structure du véhicule, ce qui peut s'avérer en contradiction avec la nécessité de protéger la batterie. Dès lors, l'allégement de la structure risque de fragiliser sa résistance mécanique et la protection de la batterie contre les intrusions lors des chocs, notamment en cas de choc arrière qui est susceptible de provoquer un effondrement du pied arrière et des intrusions dans le coffre et/ou l'habitacle.

Ainsi, il existe un besoin d'une solution permettant de rigidifier une structure de caisse d'un véhicule pour renforcer celle-ci contre les chocs arrière.

La présente invention a pour objet de pallier les problèmes exposés précédemment. Dans ce contexte technique, un but de la présente invention est de fournir un dispositif absorbeur permettant de renforcer une caisse de véhicule et de limiter l'effondrement d'un pied arrière en cas de choc arrière.

A cet effet, la présente invention se rapporte à un dispositif absorbeur pour une caisse de véhicule automobile, le dispositif présentant au moins une première patte d'appui chacune faisant saillie d'un corps du dispositif et conçue pour venir en appui d'un pied arrière de la caisse, le dispositif présentant au moins une deuxième patte d'appui chacune faisant saillie du corps et conçue pour venir en appui d'un passage de roue de la caisse, le dispositif présentant au moins une troisième patte d'appui chacune faisant saillie du corps et conçue pour venir en appui de la caisse, le corps étant conçu pour transmettre, de chaque première patte d'appui vers chaque deuxième patte d'appui, au moins une partie des efforts générés lors d'un choc arrière sur le pied arrière, chaque troisième patte d'appui étant conformée pour limiter la rotation du corps durant la transmission de l'énergie du choc arrière.

L'invention concerne également une caisse de véhicule automobile présentant au moins un pied arrière et au moins un passage de roue, la caisse présentant au moins un dispositif absorbeur selon l'invention, chaque première patte d'appui étant disposée en appui d'un pied arrière, chaque deuxième patte d'appui étant disposée en appui d'un passage de roue, chaque troisième patte d'appui étant en appui de la caisse pour limiter la rotation du corps durant la transmission de l'énergie du choc arrière sur le pied arrière.

L'invention concerne enfin un véhicule automobile présentant au moins une caisse selon l'invention.

Ainsi, le dispositif absorbeur selon l'invention permet de renforcer la caisse selon l'invention dans la zone de custode et/ou le coffre. En cas de choc arrière, au moins une partie de l'énergie libérée lors du choc est transmise par la première patte d'appui vers la deuxième patte d'appui à travers le corps du dispositif, tandis que la troisième patte d'appui limite la rotation du corps durant la transmission des efforts. L'expérience montre que le dispositif absorbeur limite les déformations susceptibles de provoquer une intrusion et des dommages à la batterie. Le dispositif absorbeur représente un ajout de masse très limité ayant un impact négligeable sur la masse finale et l'autonomie du véhicule selon l'invention.

Selon un mode de réalisation du dispositif, le corps est formé d'une tôle s'étendant suivant un premier plan, chaque première et deuxième pattes d'appui prolongeant le corps et comportant au moins une pliure de la tôle autour d'un axe s'étendant dans le premier plan.

Avantageusement, la troisième patte d'appui fait saillie de la tôle suivant une direction perpendiculaire au premier plan.

Selon une possibilité du dispositif absorbeur, au moins une des première et/ou deuxième pattes d'appui présente au moins une nervure de renfort.

Selon un mode de réalisation, le dispositif est formé par emboutissage.

L'invention sera mieux comprise à la lecture de la description détaillée qui va suivre, donnée uniquement à titre d'exemple non limitatif et faite en se référant au dessin annexé sur lequel :

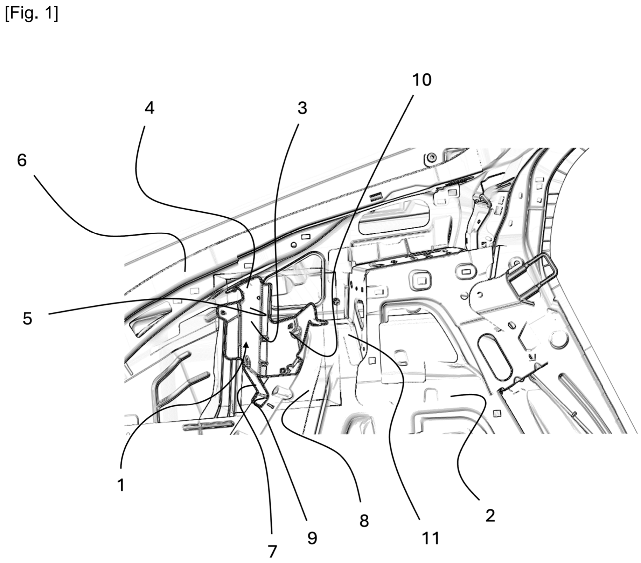

[Fig. 1] la figure 1 représente une vue en perspective partielle d'un dispositif selon l'invention implanté sur une caisse selon l'invention.

Un dispositif 1 absorbeur selon l'invention, illustré sur la figure 1, est conçu pour équiper une caisse 2 de véhicule automobile, partiellement illustrée sur la figure.

Avantageusement, le dispositif 1 est formé d'une tôle 3 emboutie.

Le dispositif 1 présente au moins une première patte d'appui 4 chacune faisant saillie d'un corps 5 du dispositif 1. Chaque première patte d'appui 4 est conçue pour venir en appui d'un pied arrière 6 de la caisse 2.

Le dispositif 1 présente également au moins une deuxième patte d'appui 7 chacune faisant saillie du corps 5 et conçue pour venir en appui d'un passage de roue 8 de la caisse 2.

Comme illustré sur la figure, le corps 5 est formé de la tôle 3 s'étendant suivant un premier plan, chaque première 4 et deuxième 7 pattes d'appui prolongeant le corps 5 et comportant au moins une pliure 9 de la tôle 3 autour d'un axe s'étendant dans le premier plan.

Enfin, le dispositif 1 présente au moins une troisième patte d'appui 10 chacune faisant saillie du corps 5 et conçue pour venir en appui de la caisse 2, notamment dans la zone de custode.

Le corps 5 est conçu pour transmettre, de chaque première patte d'appui 4 vers chaque deuxième patte d'appui 7, au moins une partie des efforts générés lors d'un choc arrière sur le pied arrière 6, chaque troisième patte d'appui 10 étant conformée pour limiter la rotation du corps 5 durant la transmission de l'énergie du choc arrière.

Dans le mode de réalisation illustré sur la figure, la troisième patte d'appui 10 fait saillie de la tôle 3 suivant une direction perpendiculaire au premier plan.

Dans le mode de réalisation illustré sur la figure, la troisième patte d'appui 10 est fixée en appui de la caisse 2 sur un renfort 11 disposé entre le pied arrière 6 et le passage de roue 8.

Avantageusement, au moins une des première 4 et/ou deuxième 7 pattes d'appui présente au moins une nervure de renfort.

Dans la caisse 2, le dispositif 1 est donc fixé de sorte que la première patte d'appui 4 vient en appui du pied arrière 6, la deuxième patte d'appui 7 venant en appui du passage de roue 8 et la troisième patte d'appui 10 en appui du renfort 11. Le premier plan dans lequel s'étend le corps 5 est, par exemple, sensiblement vertical.

Avantageusement, la caisse 2 est équipée de deux dispositifs 1, chacun disposé d'un côté de la caisse 2.

Ainsi, le dispositif 1 absorbeur permet de renforcer la caisse 2 dans la zone de custode et/ou le coffre. En cas de choc arrière, au moins une partie de l'énergie libérée lors du choc est transmise par la première patte d'appui 4 vers la deuxième patte d'appui 7 à travers le corps 5 du dispositif 1, tandis que la troisième patte d'appui 10 limite la rotation du corps 5 durant la transmission des efforts. L'expérience montre que le dispositif 1 absorbeur limite les déformations susceptibles de provoquer une intrusion et des dommages à la batterie.

L'invention ne se limite pas au mode de réalisation du dispositif absorbeur décrit ci-avant, seulement à titre d'exemple, mais d'autres modes de réalisation peuvent être conçus par l'homme de métier sans sortir du cadre et de la portée de la présente invention.

## Revendications

1. Dispositif (1) absorbeur pour une caisse (2) de véhicule automobile, le dispositif (1) présentant au moins une première patte d'appui (4) chacune faisant saillie d'un corps (5) du dispositif (1) et conçue pour venir en appui d'un pied arrière (6) de la caisse (2), le dispositif (1) présentant au moins une deuxième patte d'appui (7) chacune faisant saillie du corps (5) et conçue pour venir en appui d'un passage de roue (8) de la caisse (2), le dispositif (1) présentant au moins une troisième patte d'appui (10) chacune faisant saillie du corps (5) et conçue pour venir en appui de la caisse (2), le corps (5) étant conçu pour transmettre, de chaque première patte d'appui (4) vers chaque deuxième patte d'appui (7), au moins une partie des efforts générés lors d'un choc arrière sur le pied arrière (6), chaque troisième patte d'appui (10) étant conformée pour limiter la rotation du corps (5) durant la transmission de l'énergie du choc arrière.

2. Dispositif (1) absorbeur selon la revendication 1, **caractérisé en ce que** le corps (5) est formé d'une tôle (3) s'étendant suivant un premier plan, chaque première (4) et deuxième (7) pattes d'appui prolongeant le corps (5) et comportant au moins une pliure (9) de la tôle (3) autour d'un axe s'étendant dans le premier plan.

3. Dispositif (1) absorbeur selon la revendication 2, **caractérisé en ce que** la troisième patte d'appui (10) fait saillie de la tôle (3) suivant une direction perpendiculaire au premier plan.

4. Dispositif (1) absorbeur selon l'une des revendications 1 à 3, **caractérisé en ce que** au moins une des première (4) et/ou deuxième (7) pattes d'appui présente au moins une nervure de renfort.

5. Dispositif (1) absorbeur selon l'une des revendications 1 à 4, **caractérisé en ce qu'**il est formé par emboutissage.

6. Caisse (2) de véhicule automobile présentant au moins un pied arrière (6) et au moins un passage de roue (8), la caisse (2) présentant au moins un dispositif (1) absorbeur selon l'une des revendications 1 à 5, chaque première patte d'appui (4) étant disposée en appui d'un pied arrière (6), chaque deuxième patte d'appui (7) étant disposée en appui d'un passage de roue (8) chaque troisième patte d'appui (10) étant en appui de la caisse (2) pour limiter la rotation du corps (5) durant la transmission de l'énergie du choc arrière sur le pied arrière (6).

7. Véhicule automobile présentant au moins une caisse (2) selon la revendication 6.
